# EUROPEAN PATENT APPLICATION

(11) **EP 1 607 639 A1**
(43) Date of publication of application: **21.12.2005**
(21) Application number: 05012884.2
(22) Date of filing: 15.06.2005
(51) Int. Cl.: F16B 19/10

(54) **Two-piece, corrosion-resistant, locking blind fastener**

(30) Priority: 16.06.2004 US 869564
(71) Applicant: Huck International, Inc., Tucson, AZ 85714 (US)
(72) Inventor: Mercer, Larry Dale, 76706 Texas (US)
(74) Representative: Parry, Simon James

(57) **Abstract**

A locking fastener (10) that includes an elongated tubular member (14) and a pin member (12). The elongated tubular member (14) has a body (15) with an internal diameter, a first end (16), and a second end (18), the second end having a head (24). The pin member (12) has a first end (42), a second end (44) and a mechanical lock portion (54). The pin member first end (42) has a diameter about the same as the tubular member body internal diameter. The pin member first end (42) further has a head (46), the head having a diameter larger than the tubular member body internal diameter. The mechanical lock portion (54) is disposed between the pin member first end (42) and the second end (44). The pin member (12) is disposed in the tubular member (14) with the pin head (46) extending from the tubular member first end (16). In this configuration the pin member (12) is structured to move from a first position, wherein the pin head (46) is spaced from the tubular member head (24) and wherein the tubular member first end (16) is not deformed, to a second position where the pin head (46) is closer to the tubular member head (24) and wherein the tubular member first end (16) is flared and the tubular member head (24) is swaged into the mechanical lock portion (54).

## Description

### Field of the Invention

The present invention relates to locking fasteners and, more specifically, to a locking fastener having a mechanical lock at one end and a flared tip at the other end.

### Description of the Related Art

Locking fasteners, or rivets, are well known in the art. Typically, a locking fastener includes two components; a tubular member and a pin. The tubular member has a first end, which is structured to deform, and a second end having a head with an annular flange. The pin is a cylindrical member having a first end with a head, which has a diameter which is slightly greater than the tubular member diameter, and a second end with a gripping surface. The pin is made from a material that is harder than the tubular member. When assembled, the pin is disposed within the tubular member with the head extending beyond a tubular member first end and the pin second end extends beyond the tubular member head. The pin is structured to move from an initial position wherein the pin head is spaced from the tubular member head, and wherein the tubular member is not deformed, to a second position where the pin head is closer to the tubular member head and wherein the tubular member is deformed. Generally, the pin and the tubular member are made from carbon steel. To resist corrosion, the carbon steel is treated with a corrosion resistant coating.

The locking fastener is structured to secure two or more layers of material together. Generally, the locking fastener is acted upon by a pull tool structured to apply an increasing tension force on the pin. A first, deformation load causes the pin to deform and then, as the load is increased to the ultimate tensile strength of the pin, a pin break load causes the gripping surface portion of the pin to break off. Typically, the pin includes a single most narrow point, or breakneck, whereat the pin is structured to break. Thus, the installation process leaves the deformed tubular member and a portion of the pin disposed within the opening within the materials. In operation, the locking fastener with the pin in the first position is inserted through an opening in two or more layers of material until the tubular member flange abuts the bottom layer of material and the tubular member first end extends beyond the top layer of material. To lock the fastener, a user utilizes the pull tool which is structured to engage the pin gripping surface and to apply an axial force on the pin, thereby moving the pin to the second position. That is, the pull tool is structured to draw the pin head toward the tubular member head. Because the pin head has a greater diameter than the inner diameter of the tubular member, and because a portion of the tubular member is made from a softer material than the pin, the tubular member first end deforms. Typically, the act of drawing down the pin head causes the layers of material to be compressed. Thus, the layers of material are secured between the deformed tubular member first end and the tubular member flange.

Additionally, bulbed and split locking fasteners (as described below) have included a mechanical lock at the tubular member head. That is, the pin is further structured with a plurality of locking ridges at a location adjacent to the tubular member head. The pull tool is further structured to apply a radially inward force to the tubular member head. This force causes the tubular member head to swage into engagement with the pin locking ridges. The swage load is between the deformation load and the pin break load. Thus, in operation, the tool first causes the tubular member first end to deform, then swages the tubular member head, and finally breaks the pin. Other locking fasteners include a flange at the tubular member head. Such a flange prevents the anvil on the pull tool from pushing against the workpiece. This is desirable because when an anvil presses against the workpiece before pinbreak, the anvil may seat the blind side into the sheetline by an additional amount and thereby cause the locking fastener to be loose after installation.

Typically, the tubular member first end is deformed in one of three ways, the tubular member first end may be bulbed, split, or flared. A bulbed first end occurs when the pin head has a flat, or acute, surface engaging the distal tip of the tubular member first end. In this configuration, the distal tip of the tubular member first end is drawn axially toward the tubular member second end. This action causes the medial portion of the first end to expand radially outwardly, that is, the exposed portion "bulbs" out and then the upper portion of the bulb is pulled flat against the lower portion of the bulb. To ensure that the tubular member bulges outwardly at the proper point, the tubular member is annealed in a selected pattern, *see e.g.,* U.S. Patent 3,253,495. The disadvantage to this type of locking fastener is that the process of annealing the tubular member in the selected pattern is complex and expensive. Additionally, the act ofbulbing the tubular member first end often created breaks in the corrosion resistant coating applied to the tubular member.

A split first end is typically created by sharp edges on the pin head or weak points on the tubular member first end distal tip. Further, the pin head has an obtuse angle relative to the tubular member. Thus, when the pin is drawn towards the second end, the first end is split into two or more fingers and the fingers are forced outward from the pin head. That is, as the pin head is moved adjacent to the layers, the fingers are bent radially outward. The disadvantage to this design is that, when the tubular member is split, the interior portion of the tubular member is exposed. The interior of the tubular member is not treated with the corrosion resistant coating. Thus, the split tubular member first end is subject to corrosion.

A flared first end is created by the pin head moving into, but not splitting, the first end. That is, as the pin head moves toward the tubular member head, the tubular member first end diameter is increased. However, a portion of the tubular member first end may curl inwardly, that is the diameter may decrease from the maximum diameter, after the pin head has passed. As noted above, flared locking fasteners have not incorporated the mechanical lock at the tubular member head. Additionally, while the act of flaring the tubular member first end causes a less extreme deformation than bulbing and splitting, flaring may still create breaks in the corrosion resistant coating applied to the tubular member.

Additionally, because the pin is always broken, the exposed surface of the breakneck is subject to corrosion. Locking fasteners that are subject to corrosion are especially not suitable for employment in shipping containers for cargo ships. Such containers are often exposed to saltwater and other corrosive environments. Also, because the locking fastener is typically made from carbon steel, the deformation load, swage load, and pin break load tend to be high. Such high loads require energy to create and cause wear and tear on the pull tool.

There is, therefore, a need for a locking fastener with a flared first end and a mechanical lock at the tubular member head.

There is a further need for a locking fastener made from corrosion-resistant metal.

There is a further need for a locking fastener made from softer metal having a lower deformation load, swage load, and pin break load.

### Summary Of The Invention

These needs, and others, are met by the present invention which provides a locking fastener having a tubular member that includes a mechanical lock at the head and a flared first end. Because the tubular member first end is structured to be flared, the entire tubular member may be annealed, or not annealed at all, thereby reducing the complexity of manufacture. Further, the locking fastener is, preferably, made from aluminum or stainless steel. As such, the material of the locking fastener is resistant to corrosion without a coating. Thus, even after deformation of the tubular member and pin break, the locking fastener is resistant to corrosion. Additionally, because aluminum and stainless steel are typically less hardenable than carbon steel, the present fastener has a lower deformation load, swage load, and pin break load. Thus, the locking fastener of the present invention is easier to manipulate and reduces wear and tear on the pull tool.

In a preferred embodiment, the locking fastener includes a collar flange. The collar flange prevents the pull tool from pressing against the workpiece and causing the blind side to seat into the workpiece. Additionally, in the preferred embodiment, the transition angle between the pin member head and pin member body, measured from a vertical line, is between about 25° to 50°. This angle is steep enough to pull out gap during installation, but not so steep as to dilate the hole of a thin workpiece and pull the pin head through the hole.

### Brief Description of the Drawings

A full understanding of the invention can be gained from the following description of the preferred embodiments when read in conjunction with the accompanying drawings in which:
Figure 1 is a side view of a locking fastener.
Figure 2 is a cross-sectional view of the locking fastener.
Figure 3A is a cross-sectional view of the locking fastener installed and showing the minimum grip length. Figure 3B is a cross-sectional view of the locking fastener installed and showing the maximum grip length.

### Detailed Description of Preferred Embodiments

Directional phrases used herein, such as upper, lower, front, back, etc., relate to the orientation of the elements shown in the drawings and are not limiting upon the claims.

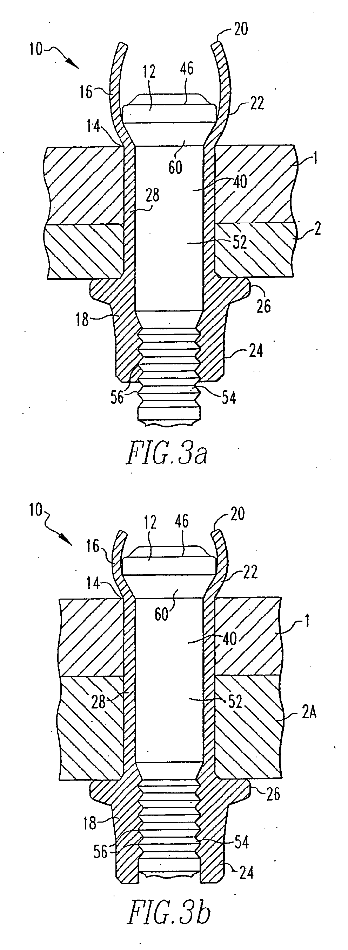

As described below, the locking fastener 10 is inserted through an opening in two or more layers of material 1, 2. As used herein, the portion of the locking fastener 10 disposed within the layers of material 1, 2 is identified as the "grip length" 28. As shown in Figures 3A and 3B, the grip length 28 varies depending upon the thickness of the layers of material 1, 2.

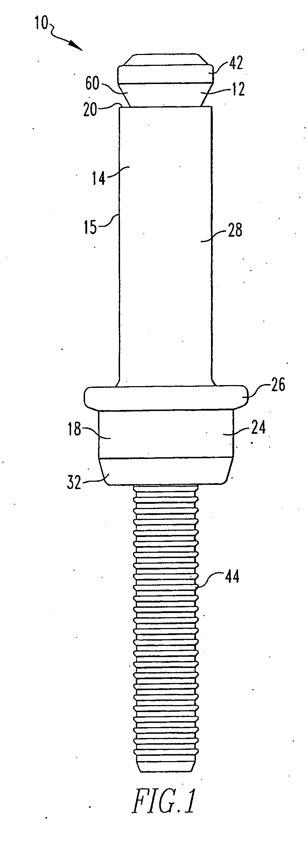

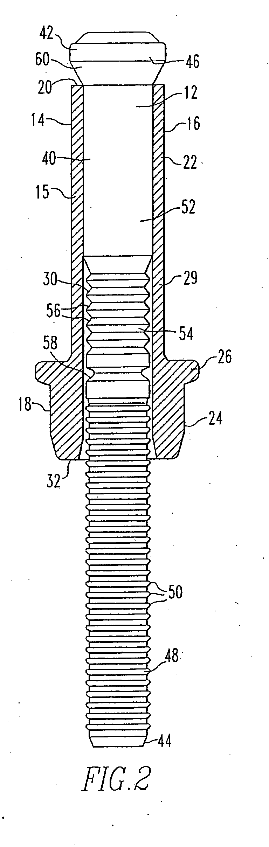

As shown in Figure 1, the locking fastener 10 includes a pin member 12 and a tubular member 14. The tubular member 14 has an elongated body 15 having a first end 16, a second end 18, and a grip length 28. The tubular member first end 16 includes a distal tip 20 and an exposed portion 22. The tubular member second end 18 includes a head 24 and an annular flange 26. The grip length 28 is disposed between the flange 26 and the exposed portion 22. The tubular member first end 16 and the grip length 28 have a first outer diameter. For example, for a selected locking fastener 10, the first outer diameter is, preferably between about .394" and .399", and more preferably about .397". The tubular member head 24 has a second outer diameter that is, preferably, greater than the first outer diameter. The second outer diameter is, preferably, between about .556" and .564", and more preferably, about .560". The flange 26 has a third outer diameter that is greater than the second outer diameter. The third outer diameter is preferably between about .720" and .760" and, more preferably, about .740". As shown in Figure 2, the tubular member body 15 defines an opening 30. Thus, the tubular member body 15 inner diameter is, preferably, between about .296" and .302" and, more preferably, about .299". The distal end 32 of the tubular member head 24 may be chamfered.

The pin member 12, shown best in Figure 2, includes an elongated body 40 having a first end 42, a second end 44, and a mechanical lock portion 54. The pin member first end 42 includes a pin head 46 and a stem portion 52. A gripping surface 48, preferably having a plurality of gripping ridges 50, is disposed at the pin member second end 44. Adjacent to the stem portion 52 is the mechanical lock portion 54 having a plurality of locking ridges 56. Between the locking portion 54 and the gripping surface 48 is a breakneck 58. The pin head 46 has a maximum diameter that is generally the same as the first outer diameter of the tubular member 14. That is, the pin head 46 has a diameter of, preferably, between about .402" and .406", and more preferably, about .404". Thus, the pin head 46 has a greater diameter than the tubular member opening 30. The stem portion 52 has a diameter that is substantially the same as, or slightly less than, the tubular member body 15 inner diameter. Thus, the stem portion 52 fits snugly within the opening 30. The stem portion 52 has a diameter that is preferably between about .302" and .304", and more preferably about .303". The transition portion 60 between the pin head 46 maximum diameter and the stem portion 52 has a length such that the angle of the transition portion 60 measured from a vertical line is between about 25° to 50° total included angle. The gripping surface 48 and the mechanical lock portion 54 have a diameter smaller than the opening 30. The diameter of the gripping surface 48 and the mechanical lock portion 54 is, preferably, between about .270" and .278", and more preferably about .275". The depth of the grooves at the mechanical lock portion 54 is between about 0.019 inch and 0.021 inch and more preferably about 0.020 inch. The breakneck 58 is the narrowest portion of the pin body 40 having a diameter between about .196" and .200", and more preferably about .198".

The locking fastener 10 when assembled has the pin member 12 disposed within the tubular member 14. The pin head 46 extends from.the tubular member first end 16. The pin member gripping surface 48 extends from the tubular member second end 18. The pin member 12 is structured to move from a first position wherein the tubular member 14 is not deformed (Figures 1 and 2) to a second position wherein the tubular member 14 is deformed (Figure 3A). When moving between the first position and the second position, the pin head 46 is moved axially towards the tubular member second end 18. Because the pin head 46 has a greater diameter than the tubular member first end 16, the tubular member first end 16 must deform to allow the pin head 46 to pass therethrough. The pin member 12 is structured to move from an initial position wherein the pin head 46 is spaced from the tubular member head 24, and wherein the tubular member 14 is not deformed, to a second position where the pin head 46 is closer to the tubular member head 24 and wherein the tubular member 14 is deformed.

In operation, the locking fastener 10 is structured to hold together one or more layers of material 1, 2 as shown in Figures 3A and 3B. That is, the materials 1, 2 have an opening therethrough through which the locking fastener tubular member first end 16 is extended. Thus, the pin head 46 and tubular member first end 16 are disposed on the upper side of the layers 1, 2 and the tubular member head 24 and pin member gripping surface 48 are disposed on the lower side of the layers 1, 2. When the locking fastener 10 is disposed through the opening in the materials 1, 2, the flange 26 abuts the lower side of the bottom layer 2. As is known in the art, a pull gun (not shown) is structured to engage the grip length 28 of the pin member 12 and draw the pin head 46 towards the tubular member second end 18. The pull gun is further structured to radially compress the tubular member head 24. Accordingly, in operation, the pull gun engages the pin member grip length 28 and moves the pin member 12 axially within the tubular member 14 towards the tubular member second end 18. As the pin member transition portion 60 engages the tubular member distal tip 20 and first end 16, the tubular member body 15 is forced to deform, or flare, outwardly. The load required to deform the tubular member first end 16 is the "deformation load" (discussed below). The tubular member first end 16 will continue to flare until the pin member transition portion 60 enters the opening between the layers 1, 2. Thus, the pin head 46 is adjacent to the layers 1, 2. Once the pin head 46 is adjacent to the layers 1, 2, the pin member 12 can no longer move axially within the tubular member 14. As is known in the art, the resistance created by the pin head 46 engaging the layers 1, 2, causes the pull gun to apply a radially inwardly force on the tubular member head 24. This force causes the tubular member head 24 to swage into engagement with the mechanical locking ridges 56. The force applied to swage the tubular member head 24 into the lock portion 54, and more specifically the locking ridges 56, is the "swage load" (discussed below). After the tubular member head 24 has engaged the locking ridges 56, the force applied by the pole gun continues to increase to a point where the tension load exceeds the ultimate tensile strength of the pin. As the pin member 12 is most narrow at the pin member breakneck 58, the pin member 12 will break at this point causing the pin member gripping surface 48 to snap off.

The locking fastener 10 is, preferably, identified as a 3/8 inch fastener. However, as known in the art, the locking fastener 10 is a replacement for a 3/8 inch fastener which has been removed. The removal process for the original fastener may cause the opening for the original fastener to become slightly larger. Accordingly, the locking fastener 10 may have a diameter slightly larger than 3/8 inch. The locking fastener 10 is, preferably, made from a corrosion resistant material such as stainless steel or aluminum. The pin material may be, but is not limited to, Type 304 or 305 stainless steel or Alloy 2024 or 7075 aluminum. The sleeve material may be, but is not limited to, Type 384 or XM7 stainless steel or Alloy 5056, 2117 or 6061 aluminum. In a preferred embodiment, austenitic stainless pin members 12 are cold worked to 120 KSI minimum tensile to meet shear strength requirements and to have enough pinbreak strength to swage the tubular member 14. Commercial equivalent is Condition SH1 of ASTM Spec. F-593. Austenitic stainless tubular members 14, preferably, are annealed to the commercial equivalent Condition AF of ASTM Spec F-593. Aluminum pin member 12 tempers are, preferably, 2024-T4, 2024-T6 or 7075-T6, 7075-T73. The aluminum tubular member 14 tempers are, preferably, 5052-0, 5052-H22, 5056-0, 5056-H22, 2117-0, 2117-T7, 6061-0 or 6061-T7. Preferably, the stainless locking fastener pin member 12 has a hardness of at least Rockwell C22 and preferably between about Rockwell C22 to C28, and more preferably about C25. The tubular member 14 has, preferably, a hardness of at least Rockwell B65 between about Rockwell B65 to B75, and more preferably, about B70. In a preferred embodiment, the flare load is greater than 1000 pounds and preferably between about 1,000 to 2,000 pounds, and more preferably, about 1,500 pounds, the swage load is greater than 5000 pounds and preferably between about 5,000 to 6,000 pounds, and more preferably, about 5,500 pounds, and the pin break load is greater than 7000 pounds and preferably between about 7,000 and 8,000 pounds, and more preferably, about 7,500 pounds.

In operation, the locking fastener 10 is inserted through an opening in two or more layers of a material 1, 2. Preferably, the flange 26 is placed against one of the layers 1, 2. The locking fastener 10 is locked by moving the pin member 12 from the first position to the second position, whereby said tubular member first end 16 is flared. The installation is completed by swaging said tubular member head 24 into the mechanical lock portion 54.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of invention which is to be given the full breadth of the claims appended and any and all equivalents thereof.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A locking fastener comprising:
an elongated tubular member having a body with an internal diameter, a first end, and a second end, said second end having a head;
an elongated pin member having first end, a second end and a mechanical lock portion, said first end having a diameter about the same as said tubular member body internal diameter, said first end further having a head, said head having a diameter larger than said tubular member body internal diameter, said mechanical lock portion disposed between said first end and said second end;
said pin member extends through said tubular member with said pin head extending from said tubular member first end; and
wherein said pin member is structured to move from a first position wherein said pin head is spaced from the tubular member head, and wherein the tubular member first end is not deformed, to a second position where the pin head is closer to the tubular member head and wherein said tubular member first end is flared and said tubular member head is swaged into said mechanical lock portion.

2. The locking fastener of Claim 1, wherein said mechanical lock portion includes a plurality of locking ridges.

3. The locking fastener of Claim 1, wherein said tubular member has a uniform hardness.

4. The locking fastener of Claim 3, wherein said tubular member has been fully annealed.

5. The locking fastener of Claim 3, wherein said tubular member has not been annealed.

6. The locking fastener of Claim 1, wherein:
said tubular member first end is structured to flare at a deformation load of greater than 1,000 pounds;
said tubular member second end is structured to swage into locking ridges at a swage load of greater than 5,000 pounds; and
said pin member is structured to break at a defined point at a pin break load of greater than 7,000 pounds.

7. The locking fastener of Claim 1, wherein:
said tubular member first end is structured to flare at a deformation load of between about 1,000 to 2,000 pounds;
said tubular member second end is structured to swage into locking ridges at a swage load of between about 5,000 and 6,000 pounds; and
said pin member is structured to break at a defined point at a pin break load of between about 7,000 and 8,000 pounds.

8. The locking fastener of Claim 7, wherein:
said tubular member first end is structured to flare at a deformation load of about 1,500 pounds;
said tubular member second end is structured to swage into locking ridges at a swage load of about 5,500 pounds; and
said pin member is structured to break at a defined point at a pin break load of about 7,500 pounds.

9. The locking fastener of Claim 1, wherein the tubular member has a hardness of at least Rockwell B65.

10. The locking fastener of Claim 1, wherein the tubular member has a hardness of between about Rockwell B65 and B75.

11. The locking fastener of Claim 10, wherein the tubular member has a hardness of about Rockwell B70.

12. The locking fastener of Claim 10, wherein the pin member has a hardness of at least Rockwell C22.

13. The locking fastener of Claim 10, wherein the pin member has a hardness of between about Rockwell C22 to C28.

14. The locking fastener of Claim 10, wherein the pin member has a hardness of about Rockwell C25.

15. The locking fastener of Claim 1, wherein the pin member has a hardness of at least Rockwell C22.

16. The locking fastener of Claim 1, wherein the pin member has a hardness of between about Rockwell C22 to C28.

17. The locking fastener of Claim 16, wherein the pin member has a hardness of about Rockwell C25.

18. The locking fastener of Claim 1, wherein said pin member and said tubular member are made from a corrosion-resistant material.

19. The locking fastener of Claim 18, wherein said pin member and said tubular member are made from a metal selected from the group consisting of stainless steel and aluminum.

20. The locking fastener of Claim 1, wherein said tubular member head includes an annular flange.

21. Method of using a locking fastener including the steps of:
(a) providing a locking fastener comprising an elongated tubular member having a body with an internal diameter, a first end, and a second end, said second end having a head, an elongated pin member having first end, a second end and a mechanical lock portion, said first end having a diameter about the same as said tubular member body internal diameter, said first end further having a head, said head having a diameter larger than said tubular member body internal diameter, said mechanical lock portion disposed between said first end and said second end, said pin member extends through said tubular member with said pin head extending from said tubular member first end, and wherein said pin member is structured to move from a first position wherein said pin head is spaced from the tubular member head, and wherein the tubular member first end is not deformed, to a second position where the pin head is closer to the tubular member head and wherein said tubular member first end is flared and said tubular member head is swaged into said mechanical lock portion;
(b) inserting said locking fastener through an opening in two or more layers of a material; and
(c) locking said locking fastener by moving said pin from said first position to said second position, whereby said tubular member first end is flared.

22. The method of claim 21 including the further step of swaging said tubular member head into said mechanical lock portion.
